# EUROPÄISCHE PATENTSCHRIFT

(11) **EP 1 328 130 B1**
(45) Veröffentlichungstag und Bekanntmachung des Hinweises auf die Patenterteilung: **19.10.2005**
(21) Anmeldenummer: 02360017.4
(22) Anmeldetag: 11.01.2002
(51) Int. Cl.: H04Q 3/00

(54) **Verfahren zur Erbringung von Diensten in einem Telekommunikationsnetz**
Method for service provisioning in a telecommunication network
Méthode pour mettre à disposition des services dans un réseau de télécommunication

(43) Veröffentlichungstag der Anmeldung: 16.07.2003
(73) Patentinhaber: ALCATEL, 75008 Paris (FR)
(72) Erfinder: Klumpp. Dieter, 70193 Stuttgart (DE)
(74) Vertreter: Rausch, Gabriele

(56) Entgegenhaltungen:
- WO-A-00/22868
- WO-A-00/22871
- WO-A-98/49848
- US-A- 6 018 737

## Beschreibung

Die Erfindung betrifft ein Verfahren zur Erbringung eines Dienstes in einem Telekommunikationsnetz für einen Teilnehmer des Telekommunikationsnetzes sowie einen Dienst-Server zur Durchführung des Verfahrens.

Die Erfindung geht von der Erbringung von Diensten gemäß der IN-Architektur (IN = Intelligent Network) aus, wie sie beispielsweise in dem Artikel "Eigenschaften Intelligenter Netze", Elektrisches Nachrichtenwesen, Band 63, Nummer 4, Seiten 314 bis 319, 1989 von L. Alvarez Mazo et al. beschrieben ist.

Dienste werden in einem Telekommunikationsnetz mittels Dienst-Vermittlungsknoten und Dienst-Steuerungsknoten bereitgestellt. Dienst-Vermittlungsknoten erkennen, wenn eine Verbindung zu einem Dienst-Steuerungsknoten notwendig ist, kommunizieren mit dem passenden Dienst-Steuerungsknoten entsprechend den Dienst- und Verkehrs-Lenkungsregeln, führen Kommandos von Dienst-Steuerungsknoten aus und informieren diese über alle verbindungsrelevanten Ereignisse. Die Dienst-Vermittlungsknoten sind unabhängig von der Art des erbrachten Dienstes. Die Dienst-Steuerungsknoten enthalten Dienst-Programme, also die Dienstlogik, und die zugehörigen Daten. Sie steuern die Erbringung von Diensten mittels Zugriff auf die Dienst-Vermittlungsknoten.

Mittels den Dienst-Vermittlungsknoten und den Dienst-Steuerungsknoten können beispielsweise folgende Dienste bereitgestellt werden: Kiosk-Dienst, persönliche Rufnummer, einheitliche Rufnummer, oder virtuelles privates Netz (=VPN).

Die Erbringung dieser Dienste wird hierbei durch eine Steuernachricht von einem Endgerät des Telekommunikationsnetzes gestartet. Auf eine Verbindungsanforderung mit einer Dienstkennung eines Kiosk-Dienstes wird so von dem entsprechenden Dienst-Steuerungsknoten der Kiosk-Dienst erbracht. Ist der Dienst erbracht, so wird die Diensterbringung durch den Dienst-Steuerungsknoten automatisch beendet. Andere Dienste, beispielsweise der Dienst "persönliche Rufnummer", werden für eine unbestimmte Zeit erbracht. Die Beendigung der Diensterbringung dieser Dienste wird mittels eines Dienst-Managementsystems gesteuert.

In diesem Zusammenhang offenbart die internationale Patentanmeldung WO 00/22871 ein Signalisierungssystem und ein Verfahren zum Kontoführung von sogenannten "pre-paid" Telephonie Dienstes. Dieses system belastet ein Benutzerkonto zeitabhängig bei der Inanspruchnahme des Dienstes.

Ebenso offenbart die internationale Patentanmeldung WO 00/22868 ein Verfahren und der zugehörige Apparat zum beenden von verbleibenden Teilnehmeraktivitäten mittels eines Dienstbeendungssignals wobei die verbleibenden Teilnehmeraktivitäten mittels eines Timers bestimmt werden. So beschreib auch die internationale Patentanmeldung WO 98/49848 einen Roaming-Service der automatisch aktiviert und deaktiviert wird, wieder unter Verwendung eines Timers.

Der Erfindung liegt nun die Aufgabe zu Grunde, die Erbringung von Diensten in Telekommunikationsnetzen weiter zu verbessern.

Diese Aufgabe wird gelöst durch ein Verfahren zur Erbringung eines Dienstes in einem Telekommunikationsnetz für einen Teilnehmer des Telekommunikationsnetzes nach der Lehre von Anspruch 1. Diese Aufgabe wird weiter gelöst durch einen Dienst-Server eines Telekommunikationsnetzes nach der Lehre von Anspruch 5.

Der Erfindung liegt der Gedanke zu Grunde, einen Dienst mit einem oder mit mehreren teilnehmerspezifischen Timern zu verknüpfen. Die Erbringung des Dienstes für einen Teilnehmer wird hierbei mit dem Ablauf des zugeordneten teilnehmerspezifischen Timers beendet.

Die Erfindung bringt den Vorteil mit sich, dass die Erbringung eines Dienstes besser an die Bedürfnisse von Teilnehmern angepasst werden kann. Weiter wird der Kommunikationsaufwand innerhalb des Telekommunikationsnetzes verringert und Ressourcen innerhalb des Telekommunikationsnetzes eingespart.

Vorteilhafte Ausgestaltungen der Erfindung sind den Unteransprüchen zu entnehmen.

Es ist vorteilhaft, dass der teilnehmerspezifische Timer einen Teil einer Dienstlogik des Telekommunikationsnetzes bildet. Hierdurch wird eine besonders effiziente Steuerung der Diensterbringung gewährleistet.

Weiter ist es vorteilhaft, dass ein Dienst mit einer Vielzahl von teilnehmerspezifischen Timern verknüpft ist und beim Ablauf eines dieser Timer derjenige Teilnehmer ermittelt wird, dem dieser teilnehmerspezifische Timer zugeordnet ist. Dadurch werden die Benutzerfreundlichkeit und die Effizienz des Gesamtsystems weiter verbessert.

Im folgenden wird die Erfindung an Hand von mehreren Ausführungsbeispielen unter Zuhilfenahme der beiliegenden Zeichnungen beispielhaft erläutert.
- Fig. 1: zeigt ein Blockschaltbild eines Telekommunikationsnetzes mit einem erfindungsgemäßen Dienst-Server für ein erstes Ausführungsbeispiel.
- Fig.2: zeigt ein Blockschaltbild eines Telekommunikationsnetzes für ein zweites Ausführungsbeispiel.

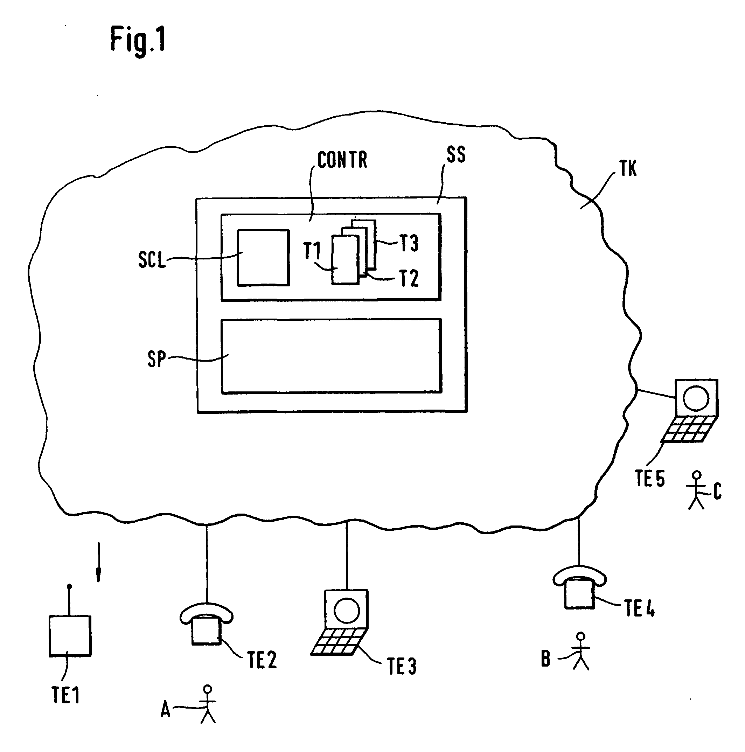

Fig. 1 zeigt das Telekommunikationsnetz TK und mehrere Endgeräte TE1 bis TE5. Die Endgeräte TE1 bis TE3 sind einem Teilnehmer A zugeordnet. Die Endgeräte TE4 und TE5 sind einem Teilnehmer B bzw. einem Teilnehmer C zugeordnet.

Bei dem Telekommunikationsnetz TK handelt es sich vorzugsweise um ein Fernsprechnetz, beispielsweise um ein ISDN-Netz (ISDN = Integrated Services Digital Network). Es ist jedoch auch möglich, dass es sich bei dem Telekommunikationsnetz TK um ein Kommunikations-Netz handelt, das der Sprach-, Daten-, und/oder Video-Kommunikation dient. Es kann sich so bei dem Telekommunikationsnetz TK auch um ein Datennetz handeln, das als Schicht 3-Protokoll das IP-Protokoll (IP = Internet Protocol) verwendet. Das IP-Protokoll kann hierbei auf ein oder mehreren ATM-, MAN-, oder Ethernet-Netzen, aufsetzen (ATM = Asynchrone Transfer Mode, MAN = Metropolitan Area Network). Es ist weiter möglich, dass das Telekommunikationsnetz TK aus mehreren Unter-Kommunikationsnetzen besteht. Diese Unter-Kommunikationsnetze können beispielsweise unterschiedlichen Netzbetreibern oder Dienstbetreibern zugeordnet sein. Es ist jedoch auch möglich, dass es sich bei solchen Unter-Kommunikationsnetzen um verschiedenartige Kommunikationsnetze handelt. Beispielsweise ist es möglich, dass das Telekommunikationsnetz TK ein oder mehrere zellulare Funknetze, beispielsweise nach dem GSM-Standard (GSM = Global System for Mobile Communication), ein oder mehrere Festnetze, beispielsweise PSTN-Netze (PSTN = Public Switched Telecommunication Network), und ein oder mehrere Daten-Netze umfasst.

Von den mit dem Telekommunikationsnetz TK verbundenen Endgeräten sind in Fig. 1 beispielhaft die Endgeräte TE1 bis TE5 gezeigt. Bei den Endgeräten TE1 bis TE5 handelt es sich um Endgeräte, mittels denen eine Kommunikation über das Telekommunikationsnetz TK möglich ist. Bei dem Endgerät TE1 handelt es sich um ein Mobilfunk-Endgerät, das beispielsweise nach dem GSM- oder UMTS-Standard (UMTS = Universal Mobile Telecommunications System) arbeitet. Bei den Endgeräten TE2 und TE4 handelt es sich um Festnetz-Endgeräte, beispielsweise um ISDN-Fernsprecher. Bei den Endgeräten TE3 und TE5 handelt es sich um Computer, die mit einer Kommunikations-Karte zur Kommunikation über das Telekommunikationsnetz TK ausgestattet sind.

Das Telekommunikationsnetz TK umfasst neben ein oder mehreren Netzknoten, die die Kommunikation über das Telekommunikationsnetz TK ermöglichen, über ein oder mehrere Dienst-Server. Diese Dienst-Server stellen Teilnehmern des Telekommunikationsnetzes TK Dienste innerhalb des Telekommunikationsnetzes TK bereit. Von den Dienst-Servern des Telekommunikationsnetzes TK ist in Fig. 1 beispielhaft der Dienst-Server SS gezeigt. Es ist auch möglich, dass der Dienst-Server SS nicht dem Netzbetreiber des Telekommunikationsnetzes TK zugeordnet ist, sondern einem von diesem unabhängigen Dienstbetreiber zugeordnet ist.

Bei dem Dienst-Server SS handelt es ich beispielsweise um einen Dienst-Steuerungsknoten gemäß der IN-Architektur (IN = intelligent network). Es ist jedoch auch möglich, dass es sich bei dem Dienst-Server SS um einen Internet- oder WAP-Server handelt (WAP = Wireless Application Protocol). Ein Internet-Server stellt Teilnehmern des Telekommunikationsnetzes TK Dienste über eine IP-Schnittstelle zur Verfügung. Vorteilhafterweise basiert hierbei die Kommunikation zwischen Teilnehmern des Telekommunikationsnetzes TK und dem Internet-Server über einen TCP/IP Protokoll-Stack, über den HTML-Dokumente und/oder Java-Programmcode ausgetauscht werden (HTML = Hyper Text Markup Language). WAP-Server stellen Teilnehmern des Telekommunikationsnetzes TK Dienste basierend auf dem WAP-Protokoll zur Verfügung.

Der Dienst-Server SS stellt ein oder mehreren Teilnehmern des Telekommunikationsnetzes TK jeweils ein oder mehrere Dienste bereit. Beispielsweise kann der Dienst-Server SS den Teilnehmern A, B und C des Telekommunikationsnetzes TK einen der folgenden Dienste bereitstellen: Anruf-Weiterleitung, VPN Dienste (VPN = Virtual Private Network), UPT Dienste (UPT = Universal Personal Telecommunication), Personalisierung des Benutzer-Interfaces, Informationsdienste, beispielsweise regelmäßige oder auf Trigger-Bedingungen basierende Übermittlung von Börsen-Daten, Warnung vor Verkehrsstaus, und ähnliche Informations- oder Routing-Dienste. Der Dienst-Server SS kann auch Internet Dienste bereitstellen, beispielsweise Anzeichendienste und Newsdienste.

Bei der Erbringung eines Dienstes in dem Telekommunikationsnetz TK für den Teilnehmer A wird nun folgendes Verfahren durchgeführt.

Wenn die Erbringung des Dienstes durch den Teilnehmer A initiiert wird, wird ein teilnehmerspezifischer Timer gestartet und sodann mit der Erbringung des Dienstes für den Teilnehmer A begonnen. Mit dem Ablauf des dem Teilnehmer A zugeordneten teilnehmerspezifischen Timers wird sodann die Erbringung des Dienstes für den Teilnehmer A beendet.

Der Teilnehmer A kann hierbei die Erbringung des Dienstes dadurch initiieren, dass er, beispielsweise durch Drücken einer speziellen Taste oder der Wahl einer speziellen Nummer, eines der Endgeräte TE1 bis TE3 veranlasst, eine Steuernachricht an den Dienst-Server SS zu senden. Es ist jedoch auch möglich, dass der Teilnehmer A die Erbringung des Dienstes initiiert, indem er auf das Senden einer bestimmten Steuernachricht verzichtet. Auch ist es möglich, dass die Initiierung über eine Kommunikations-Verbindung zwischen einem Endgerät des Telekommunikationsnetzes TK und dem Dienst-Server SS erfolgt, über die ein Sprach-Signal von dem Teilnehmer A an den Dienst-Server SS übertragen wird. Dieses Sprach-Signal wird sodann von dem Dienst-Server SS mittels eines Spracherkennungs-Verfahrens ausgewertet. Die Initiierung kann hierbei auch eine Authentisierungs- oder Autorisierungs-Prozedur umfassen.

Der Dienst-Server SS wird von einem oder mehreren miteinander verbundenen Rechnern und der auf diesen Rechnern aufsetzenden Software gebildet. Durch den Ablauf der Software des Dienst-Servers SS auf der Hardware des Dienst-Servers SS werden die im folgenden Funktionen des Dienst-Servers SS erbracht.

Aus funktioneller Sicht erbringt der Dienst-Server SS die Funktionen einer Diensterbringungseinheit SP und die Funktionen einer Steuereinheit CONTR.

Die Diensterbringungseinheit SP erbringt einen Dienst für einen oder mehrere Teilnehmer des Telekommunikationsnetzes TK. Die Diensterbringungseinheit SP umfasst so beispielsweise ein IN-Dienstprogramm, das die Erbringung eines der oben beschriebenen Dienste steuert. Bei komplexeren Diensten können der Diensterbringungseinheit SP komplexe Datenbanken und Dienst-Programme zugeordnet sein.

Die Steuereinheit CONTR umfasst Funktionen, die die Erbringung des von der Diensterbringungseinheit bereitgestellten Dienstes oder der von der Diensterbringungseinheit SP bereitgestellten Dienste für Teilnehmer des Telekommunikationsnetzes TK startet und beendet. Es ist hierbei möglich, dass die der Steuereinheit CONTR zuordenbare Software einen integralen Bestandteil der der Diensterbringungseinheit SP zuordenbaren Software bildet. Hierbei ist es vorteilhaft, dass die Steuereinheit CONTR von Programmcode gebildet wird, der einen Teil des Dienst-Programms des Dienst-Servers SS bildet und somit Teil einer Dienstlogik des Telekommunikationsnetzes TK ist.

Auf eine Steuernachricht von einem Endgerät des Telekommunikationsnetzes TK startet die Steuereinheit CONTR die Erbringung eines Dienstes für einen Teilnehmer des Telekommunikationsnetzes TK durch die Diensterbringungseinheit SP. Auf den Empfang dieser Steuernachricht startet sie weiter einen teilnehmerspezifischen Timer.

Die Steuereinheit CONTR weist aus funktioneller Sicht eine Funktion SCL und ein oder mehrere Timer auf, von denen in Fig. 1 beispielhaft drei Timer T1 bis T3 gezeigt sind.

Die Timer T1 bis T3 können von Prozessen gebildet sein, die nach einem bestimmten Zeitablauf eine Trigger-Nachricht an die Funktion SCL senden oder ein Flag auf einen bestimmten Wert setzen. Es ist jedoch auch möglich, dass es sich bei den Timern T1 bis T3 um Hardware-Timer handelt, die beispielsweise von einem I/O-Bauteil bereitgestellt werden.

Die Funktion SCL empfängt Steuernachrichten von Endgeräten des Telekommunikationsnetzes TK. Diese Steuernachrichten können beispielsweise MFC-Signale (MFC= Multi Frequency Code), Sprachsignale oder digitale Signale sein. Es hierbei auch möglich, dass Steuernachrichten von Endgeräten des Telekommunikationsnetzes TK hierbei über ein Netzelement des Telekommunikationsnetzes TK geleitet werden, das die Steuernachrichten umsetzt oder modifiziert. Beispielweise kann eine Steuernachricht von dem Endgerät TE1 über einen Dienst-Vermittlungsknoten des Telekommunikationsnetzes TK geleitet werden, der eine dieser Nachricht entsprechende INAP Nachricht generiert (INAP = Intelligent Network Application Protocol) und die INAP Nachricht an den Dienst-Server weiterleitet.

Die Funktion SCL ermittelt nun, ob die empfangene Steuernachricht das Starten der Erbringung des Dienstes initiieren soll oder nicht. Weiter ermittelt die Funktion, ob sie autorisiert ist, auf den Empfang dieser speziellen Steuernachricht die Erbringung des Dienstes zu starten. Ist dies gegeben, so startet sie die Erbringung des Dienstes für einen Teilnehmer des Telekommunikationsnetzes TK durch die Diensterbringungseinheit SP. Dies kann beispielsweise mittels des Aufrufs eines entsprechenden Programms realisiert werden. Bei diesem Programmaufruf können hierbei Daten über den Teilnehmer übergeben werden, für den die Diensterbringungseinheit SP den Dienst zu erbringen hat.

Weiter startet die Funktion SCL einen dem Teilnehmer zugeordneten teilnehmerspezifischen Timer. Sie generiert so beispielsweise einen dem Teilnehmer zugeordneten Prozess, der die Funktion eines teilnehmerspezifischen Timers erbringt. Es ist jedoch auch möglich, dass sie einen dem Teilnehmer zugeordneten hardware- oder softwaremäßig realisierten Timer auswählt und startet.

Bei dem Starten des Timers ist es hierbei möglich, dass die Funktion SCL den Timer auf einen teilnehmerindividuellen Wert setzt. Der teilnehmerindividuelle Wert kann hierbei von der Funktion SCL auf Grund von Umgebungsbedingung und einem dem Teilnehmer zugeordneten Benutzerprofil berechnet werden. Es ist jedoch auch möglich, dass der teilnehmerindividuelle Wert von einem Endgerät des Telekommunikationsnetzes TK an den Dienst-Server SS übergeben wird.

Beispielsweise ist es möglich, dass das Endgerät TE1 auf ein Auswahl-Kommando des Teilnehmers A ein Fenster auf dem Display des Endgerätes TE1 darstellt. In diesem Fenster ist eine Start- und eine End-Zeit für den zu initiierenden Dienst dargestellt (Default Wert). Diese Zeiten können sodann von dem Teilnehmer A durch entsprechende Steuer-Kommandos modifiziert werden. Die so veränderten Start- und End-Zeiten werden sodann von dem Endgerät TE1 an den Dienst-Server SS übermittelt. Die Funktion SCL startet den Dienst zu der vorgegebenen Start-Zeit und setzt den benutzerspezifischen Timer auf einen Wert, der der vorgegebenen End-Zeit entspricht.

Die Steuereinheit CONTR beendet die Erbringung des Dienstes durch die Diensterbringungseinheit SP für den Teilnehmer des Telekommunikationsnetzes, wenn der dem Teilnehmer zugeordnete teilnehmerspezifische Timer abgelaufen ist. Hierfür überwacht die Funktion SCL den Ablauf der Timer T1 bis T3. Ergibt sich bei dieser Überwachung, dass einer der Timer T1 bis T3 abgelaufen ist, so ermittelt die Funktion SCL, welchem Teilnehmer des Telekommunikationsnetzes TK der abgelaufene Timer zugeordnet ist und beendet sodann die Erbringung des Dienstes für diesen Teilnehmer. Es ist möglich, dass die Funktion SCL für die Überwachung regelmäßig die Timerwerte der Timer T1 bis T3 ermittelt. Es ist auch möglich, dass sie für die Überwachung den Timern T1 bis T3 zugeordnete Flags überwacht, die anzeigen, ob der zugeordnete Timer abgelaufen ist. Es ist auch möglich, dass die Timer T1 bis T3 beim Ablauf eine Trigger-Nachricht erzeugen und die Funktion SCL den Empfang einer solchen Trigger-Nachricht überwacht.

Bei dem Dienst-Server SS kann es sich, wie bereits oben dargestellt, um einen Dienst-Steuerungsknoten gemäß der IN-Architektur handeln. In diesem Fall erbringt die Diensterbringungseinheit SP einen oder mehrere IN Dienste. Es ist weiter möglich, dass es sich bei dem Dienst-Server SS um einen Internet-Server handelt. In diesem Fall erbringt die Diensterbringungseinheit SP einen Internet Dienst.

Es ist weiter möglich, dass die Steuereinheit CONTR und die Diensterbringungseinheit SP Teil einer Dienstlogik sind, die von einer Vermittlungsstelle des Telekommunikationsnetzes TK ausgeführt wird. Bei einer solchen Vermittlungsstelle handelt es sich vorzugsweise um eine CENTREX Vermittlungstelle. Die Vermittlungsstelle weist die Steuereinheit CONTR und die Diensterbringungseinheit SP auf und es handelt sich somit bei dieser Vermittlungsstelle um einen Dienst-Server im Sinne der Erfindung.

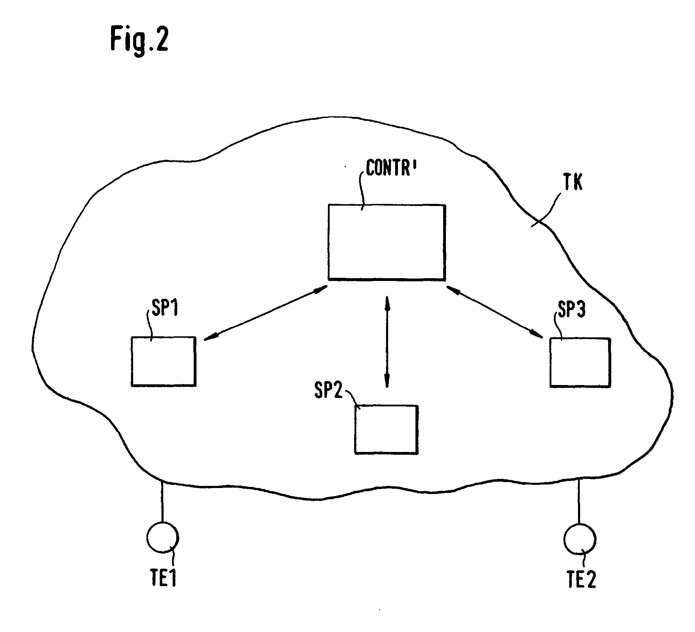

In Fig. 2 wird ein weiteres Ausführungsbeispiel der Erfindung erläutert.

Fig. 2 zeigt das Telekommunikationsnetz TK und die Endgeräte TE1 und TE2. Das Telekommunikationsnetz TK weist die Steuereinheit CONTR und drei Diensterbringungseinheiten SP1 bis SP3 auf.

In diesem Ausführungsbeispiel weist das Telekommunikationsnetz TK einen virtuellen Dienst-Server auf, der von einer Steuereinheit CONTR' und drei räumlich getrennten Diensterbringungseinheiten SP1 bis SP3 gebildet wird.

Die Steuereinheit CONTR' wird beispielsweise von einem Server des Telekommunikationsnetzes TK gebildet, der die Funktionen der Steuereinheit CONTR nach Fig. 1 erbringt.

Die Diensterbringungseinheiten SP1 bis SP3 sind räumlich verteilt im Telekommunikationsnetz TK angeordnet, um Teilnehmern des Telekommunikationsnetzes TK den von ihnen bereitgestellten Dienst ortsnah erbringen zu können. Sie werden beispielsweise von Servern des Telekommunikationsnetzes TK gebildet, die jeweils die Funktionen der Diensterbringungseinheit SP nach Fig. 1 erbringen.

Auf den Eingang der oben beschriebenen Steuernachricht startet die Steuereinheit CONTR' die Erbringung des Dienstes durch eine der Diensterbringungseinheiten SP1 bis SP3. In einem dem gestarteten teilnehmerspezifischen Timer zugeordneten Datensatz vermerkt die Steuereinheit CONTR' hierbei, welche der Diensterbringungseinheiten SP1 bis SP3 den Dienst für den Teilnehmer erbringt. Wenn der dem Teilnehmer zugeordnete teilnehmerspezifische Timer abgelaufen ist, ermittelt sie mittels des zugeordneten Datensatzes, welche der Diensterbringungseinheiten SP1 bis SP3 den Dienst für den Teilnehmer erbringt. Sie sendet nun eine Steuernachricht an diese Diensterbringungseinheit, die diese auffordert, die Erbringung des Dienstes für den Teilnehmer zu beenden.

## Patentansprüche

1. Verfahren zur Erbringung eines Dienstes (SS) in einem Telekommunikationsnetz (TK) für einen Teilnehmer (A) des Telekommunikationsnetzes (TK) unter Verwendung eines oder mehrerer teilnehmerspezifischen Timern (T1, T2, T3),
**dadurch gekennzeichnet, dass** ein teilnehmerindividueller Wert für einen teilnehmerspezifischen Timer (T1, T2, T3) ermittelt wird und der teilnehmerspezifische Timer (T1, T2, T3) auf diesen Wert gesetzt wird, dass der teilnehmerspezifische Timer (T1, T2, T3) gestartet wird und mit der Erbringung des Dienstes für den Teilnehmer begonnen wird, wenn die Erbringung des Dienstes durch den Teilnehmer (A) initiiert wird, und dass die Erbringung des Dienstes für den Teilnehmer (A) mit dem Ablauf des dem Teilnehmer (A) zugeordneten teilnehmerspezifischen Timers (T1) beendet wird.

2. Verfahren nach Anspruch 1, **dadurch gekennzeichnet, dass** der Dienst von einem Dienst-Server (SS) des Telekommunikationsnetzes (TK) erbracht wird.

3. Verfahren nach Anspruch 1, **dadurch gekennzeichnet, dass** der Dienst von einer Dienstlogik erbracht wird, die von einer Vermittlungsstelle des Telekommunikationsnetzes ausgeführt wird.

4. Verfahren nach Anspruch 1, **dadurch gekennzeichnet, dass** der teilnehmerspezifische Timer einen Teil einer Dienstlogik des Telekommunikationsnetzes bildet.

5. Dienst-Server (SS) eines Telekommunikationsnetzes (TK) mit einer Diensterbringungseinheit (SP, SP1 bis SP3) zur Erbringung eines Dienstes für ein oder mehrere Teilnehmer (A, B, C) des Telekommunikationsnetzes (TK) und mit einer Steuereinheit (CONTR), die auf eine Steuernachricht von einem Endgerät (TE1 bis TE5) des Telekommunikationsnetzes (TK) die Erbringung des Dienstes für einen der Teilnehmer (A, B, C) des Telekommunikationsnetzes (TK) durch die Diensterbringungseinheit (SP, SP1, SP2) startet,
**dadurch gekennzeichnet, dass** die Steuereinheit (CONTR) weiter so ausgestaltet ist, dass sie einen teilnehmerindividuellen Wert für den teilnehmerspezifischen Timer ermittelt und den teilnehmerspezifischen Timer auf diesen Wert setzt , dass sie auf den Empfang der Steuernachricht einen teilnehmerspezifischen Timer (T1, T2, T3) startet und dass sie die Erbringung eines Dienstes durch die Diensterbringungseinheit (SP, SP1 bis SP3) für einen Teilnehmer des Telekommunikationsnetzes beendet, wenn der dem Teilnehmer zugeordnete teilnehmerspezifische Timer (T1, T2, T3) abgelaufen ist.

6. Dienst-Server (SS) nach Anspruch 5, **dadurch gekennzeichnet, dass** die Steuereinheit (CONTR) weiter so ausgestaltet ist, dass sie den Ablauf einer Vielzahl von teilnehmerspezifischen Timern (T1, T2, T3) überwacht und beim Ablauf eines teilnehmerspezifischen Timers (T1, T2, T3) denjenigen Teilnehmer ermittelt, der diesem Timer zugeordnet ist.

7. Dienst-Server (SS) nach Anspruch 5, **dadurch gekennzeichnet, dass** die Diensterbringungseinheit (SP) so ausgestaltet ist, dass sie Mittel zur Erbringung eines IN Dienstes umfasst.

8. Dienst-Server (SS) nach Anspruch 5, **dadurch gekennzeichnet, dass** die Diensterbringungseinheit (SP1 bis SP3) so ausgestaltet ist, dass sie Mittel zur Erbringung eines Internet Dienstes umfasst.

## Claims

1. Method for providing a service (SS) in a telecommunications network (TK) for a subscriber (A) of the telecommunications network (TK), using one or more subscriber-specific timers (T1, T2, T3), **characterised in that** a subscriber-individual value is determined for a subscriber-specific timer (T1, T2, T3) and the subscriber-specific timer (T1, T2, T3) is set to this value, the subscriber-specific timer (T1, T2, T3) is started and provision of the service for the subscriber begins when provision of the service is initiated by subscriber (A) and provision of the service for subscriber (A) is terminated when the subscriber-specific timer (T1) assigned to subscriber (A) expires.

2. Method according to claim 1, **characterised in that** the service is provided by a service server (SS) of the telecommunications network (TK).

3. Method according to claim 1, **characterised in that** the service is provided by a service logistic carried out by a switching centre of the telecommunications network.

4. Method according to claim 1, **characterised in that** the subscriber-specific timer forms part of a service logistic of the telecommunications network.

5. Service server (SS) of a telecommunications network (TK) with a service provision unit (SP, SP1 to SP3) for providing a service for one or more subscribers (A, B, C) of the telecommunications network (TK) and with a control unit (CONTR), which at a control message from a terminal (TE1 to TE5) of the telecommunications network (TK) starts provision of the service for one of subscribers (A, B, C) of the telecommunications network (TK) by the service provision unit (SP, SP1, SP2), **characterised in that** the control unit (CONTR) is further configured in such a way that it determines a subscriber-individual value for the subscriber-specific timer and sets the subscriber-specific timer to this value, on receipt of the control message it starts a subscriber-specific timer (T1, T2, T3) and it terminates provision of a service by the service provision unit (SP, SP1 to SP3) for a subscriber of the telecommunications network when the subscriber-specific timer (T1, T2, T3) assigned to the subscriber has expired.

6. Service server (SS) according to claim 5, **characterised in that** the control unit (CONTR) is further configured in such a way that it monitors the course of a multiplicity of subscriber-specific timers (T1, T2, T3) and when a subscriber-specific timer (T1, T2, T3) expires detects the subscriber assigned to this timer.

7. Service server (SS) according to claim 5, **characterised in that** the service provision unit (SP) is configured in such a way that it comprises means for providing an IN service.

8. Service server (SS) according to claim 5, **characterised in that** the service provision unit (SP1 to SP3) is configured in such a way that it comprises means for providing an Internet service.

## Revendications

1. Procédé pour fournir un service (SS) dans un réseau de télécommunication (TK) pour un abonné (A) du réseau de télécommunication (TK) en utilisant une ou plusieurs temporisations spécifiques à l'abonné (T1, T2, T3), **caractérisé en ce qu'**une valeur individuelle de l'abonné est déterminée pour une temporisation spécifique à l'abonné (T1, T2, T3) et cette valeur est attribuée à la temporisation spécifique à l'abonné (T1, T2, T3), que la temporisation spécifique à l'abonné (T1, T2, T3) est démarrée et la fourniture du service pour l'abonné commence lorsque la fourniture du service est initiée par l'abonné (A) et que la fourniture du service pour l'abonné (A) se termine lorsque la temporisation spécifique à l'abonné (T1) affectée à l'abonné (A) est écoulée.

2. Procédé selon la revendication 1, **caractérisé en ce que** le service est fourni par un serveur de services (SS) du réseau de télécommunication (TK).

3. Procédé selon la revendication 1, **caractérisé en ce que** le service est fourni par une logique de service qui est exécutée par un autocommutateur du réseau de télécommunication.

4. Procédé selon la revendication 1, **caractérisé en ce que** la temporisation spécifique à l'abonné forme une parti d'une logique de service du réseau de télécommunication.

5. Serveur de services (SS) d'un réseau de télécommunication (TK) comprenant une unité de fourniture de services (SP, SP1 à SP3) pour fournir un service pour un ou plusieurs abonnés (A, B, C) du réseau de télécommunication (TK) et comprenant une unité de commande (CONTR) qui démarre la fourniture du service pour l'un des abonnés (A, B, C) du réseau de télécommunication (TK) par l'unité de fourniture de services (SP, SP1 à SP3) à réception d'une informations de commande de la part d'un terminal (TE1 à TE5) du réseau de télécommunication (TK), **caractérisé en ce que** l'unité de commande (CONTR) est en outre configurée de telle sorte qu'elle détermine une valeur individuelle de l'abonné pour la temporisation spécifique à l'abonné et attribue cette valeur à la temporisation spécifique à l'abonné, qu'à réception de l'information de commande elle démarre une temporisation spécifique à l'abonné (T1, T2, T3) et qu'elle met fin à la fourniture d'un service par l'unité de fourniture de services (SP, SP1 à SP3) pour un abonné du réseau de télécommunication lorsque la temporisation spécifique à l'abonné (T1, T2, T3) affectée à l'abonné est écoulée.

6. Serveur de services (SS) selon la revendication 5, **caractérisé en ce que** l'unité de commande (CONTR) est en outre configurée de telle sorte qu'elle surveille l'écoulement d'une pluralité de temporisations spécifiques à l'abonné (T1, T2, T3) et, lors de l'écoulement d'une temporisation spécifique à l'abonné (T1, T2, T3), détermine l'abonné auquel est affectée cette temporisation.

7. Serveur de services (SS) selon la revendication 5, **caractérisé en ce que** l'unité de fourniture de services (SP) est configurée de telle sorte qu'elle comprend des moyens pour fournir un service IN.

8. Serveur de services (SS) selon la revendication 5, **caractérisé en ce que** l'unité de fourniture de services (SP1 à SP3) est configurée de telle sorte qu'elle comprend des moyens pour fournir un service Internet.
